# EUROPEAN PATENT APPLICATION

(11) **EP 4 749 471 A2**
(43) Date of publication of application: **27.05.2026**
(21) Application number: 25218417.1
(22) Date of filing: 25.11.2025
(51) Int. Cl.: G06F 16/21, G06F 16/242, G06F 16/2452, G06F 16/25

(54) **SYSTEMS AND METHODS FOR GENERATING QUERIES FOR DATASETS USING LARGE LANGUAGE MODELS AND SCHEMAS FOR IMPROVED DATA SECURITY**

(30) Priority: 26.11.2024 US 202463724971 P
(71) Applicant: Medidata Solutions, Inc., New York, NY 10014 (US)
(72) Inventor: MANN, Jeremy, New York, NY, 10010 (US); FEIN, Jay, New York, NY, 10014 (US); ROBINSON, Hannah, New York, NY, 10014 (US); JAIN, Palash, New York, NY, 10014 (US); GUPTA, Srishti, New York, NY, 10014 (US); NOUIRA, Marouane, New York, NY, 10014 (US); SHAFQUAT, Afrah, New York, NY, 10014 (US); APTEKAR, Jacob, New York, NY, 10014 (US)
(74) Representative: Fish & Richardson P.C.

(57) **Abstract**

A computer-implemented method, including: accessing, from a hardware storage device, metadata specifying fields of one or more datasets stored in the hardware storage device and data specifying allowed operations; generating a schema in accordance with the accessed metadata and the accessed data, with the schema specifying which of the fields are accessible in responding to a request; receiving, from a client device by a computer system, a request for data based on the one or more datasets; transmitting the request and the schema to an artificial intelligence engine; receiving from the artificial intelligence engine a dataset specification that includes a structured, machine-readable representation of the request that has been generated in accordance with the schema; compiling the dataset specification into a query in accordance with the schema such that the query is executable to perform operations specified by the schema and access data specified by the schema..

## Description

### CLAIM OF PRIORITY

This application claims priority under 35 U.S.C. §119(e) to U.S. Patent Application Serial No. 63/724,971, filed on November 26, 2024, the entire contents of which are hereby incorporated by reference.

### TECHNICAL FIELD

The present disclosure generally relates to generating queries for datasets using large language models (LLMs).

### BACKGROUND

LLM engines have the ability to write code using simple language to perform mundane tasks such as documentation.

### SUMMARY

Explosion of generative artificial intelligence (AI) has unlocked content creation and efficiency improvement amongst other things. Text to queries is one such use case where generative AI is making headway.

While many solutions focus on text to query conversion directly, this methodology poses limitations. Existing query generation tools send user input to LLMs to generate query directly using these LLMs. However, running queries generated from LLMs directly on datasets including sensitive information can pose privacy and operational risks. Queries generated directly from LLMs may include erroneous syntax, mutate the underlying data, and/or may leak private information.

To address at least this, disclosed examples provide a method for generating queries using natural language input and LLMs, designed to preserve privacy of datasets where these queries can be executed upon. This approach automates high-fidelity query generation while controlling for malicious query creation and information leakage risks. It is particularly valuable for interacting with datasets including sensitive information, where risks like Structured Query Language ("SQL") injection or data exposure can lead to severe financial or discriminatory consequences. By deterministically safeguarding sensitive data during automated query generation, the query generation framework described herein facilitates secure and convenient access to insights from sensitive datasets.

Disclosed examples generate queries by a method where natural user input is captured and processed by LLMs to produce a dataset specification, which then guides the programmatic generation of a query. This ensures high-quality, accurate query operations while restricting unauthorized actions. The resulting query (e.g., SQL), can be executed on any dataset, while maintaining strict oversight over permissible query functions. Additionally, the method limits the LLM's exposure to only essential dataset elements, such as schema or metadata, minimizing the risk of information leakage and enhancing dataset protection. That is, the underlying data itself is not transmitted to the LLM. Only a schema (or other information describing the types of underlying data, types of values, structure of the data, foreign key-primary key relationships, and so forth) is transmitted to the LLM, thereby enhancing data security.

In some examples, a computer-implemented method includes accessing, from a hardware storage device, metadata specifying fields of one or more datasets stored in the hardware storage device and data specifying allowed operations; generating a schema in accordance with the accessed metadata and the accessed data, with the schema specifying which of the fields are accessible in responding to a request; receiving, from a client device by a computer system, a request for data based on the one or more datasets; transmitting the request and the schema to an artificial intelligence engine; receiving from the artificial intelligence engine a dataset specification that includes a structured, machine-readable representation of the request that has been generated in accordance with the schema; compiling the dataset specification into a query in accordance with the schema such that the query is executable to perform operations specified by the schema and access data specified by the schema; and storing, in a hardware storage device, the compiled query for execution. A system of one or more computers can be configured to perform particular operations or actions by virtue of having software, firmware, hardware, or a combination of them installed on the system that in operation causes or cause the system to perform the actions. One or more computer programs can be configured to perform particular operations or actions by virtue of including instructions that, when executed by data processing apparatus, cause the apparatus to perform the actions.

In this example, the dataset specification excludes requested data, when that requested data is specified by fields not represented in the schema. The schema is configured to exclude sensitive or personally identifiable information (PII) from accessible data. The actions include accessing, from the hardware storage device, instructions specifying that personally identifiable information (PII) or other sensitive data is excluded from representation in a dataset specification, the method further including: accessing pre-defined fields names indicative of PII or sensitive data; accessing fields names of the one or more datasets stored in the hardware storage device; and generating the schema to exclude from accessible data that data associated with fields names corresponding to the pre-defined field names indicative of PII or sensitive data. The actions include generating a computer program to perform operations including: accessing, from a hardware storage device, metadata specifying fields of one or more datasets stored in the hardware storage device and data specifying allowed operations; generating the schema in accordance with the accessed metadata and the accessed data, with the schema specifying which of the fields are accessible in responding to a request; receiving, from a client device by a computer system, the request for data based on the one or more datasets; transmitting the request and the schema to the artificial intelligence engine; receiving from the artificial intelligence engine the dataset specification that includes the structured, machine-readable representation of the request that has been generated in accordance with the schema; compiling the dataset specification into the query in accordance with the schema such that the query is executable to perform operations specified by the schema and access data specified by the schema; and storing, in a hardware storage device, the compiled query for execution; and executing the computer program to perform operations including: accessing, from a hardware storage device, metadata specifying fields of one or more datasets stored in the hardware storage device and data specifying allowed operations; generating the schema in accordance with the accessed metadata and the accessed data, with the schema specifying which of the fields are accessible in responding to a request; receiving, from a client device by a computer system, the request for data based on the one or more datasets; transmitting the request and the schema to the artificial intelligence engine; receiving from the artificial intelligence engine the dataset specification that includes a structured, machine-readable representation of the request that has been generated in accordance with the schema; compiling the dataset specification into the query in accordance with the schema such that the query is executable to perform operations specified by the schema and access data specified by the schema; and storing, in a hardware storage device, the compiled query for execution. The actions include validating the dataset specification to ensure compliance with the schema. The actions include validating the query to ensure that query is in compliance with the schema. The actions include executing the query; and based on execution of the query, retrieving, from a hardware storage device, data in accordance with the schema.

In another example, one or more machine-readable hardware storage devices store instructions that are executable by one or more processing devices to perform operations including: accessing, from a hardware storage device, metadata specifying fields of one or more datasets stored in the hardware storage device and data specifying allowed operations; generating a schema in accordance with the accessed metadata and the accessed data, with the schema specifying which of the fields are accessible in responding to a request; receiving, from a client device by a computer system, a request for data based on the one or more datasets; transmitting the request and the schema to an artificial intelligence engine; receiving from the artificial intelligence engine a dataset specification that includes a structured, machine-readable representation of the request that has been generated in accordance with the schema; compiling the dataset specification into a query in accordance with the schema such that the query is executable to perform operations specified by the schema and access data specified by the schema; and storing, in a hardware storage device, the compiled query for execution.

In this example, the dataset specification excludes requested data, when that requested data is specified by fields not represented in the schema. The schema is configured to exclude sensitive or personally identifiable information (PII) from accessible data. The operations further include: accessing, from the hardware storage device, instructions specifying that personally identifiable information (PII) or other sensitive data is excluded from representation in a dataset specification, the method further including: accessing pre-defined fields names indicative of PII or sensitive data; accessing fields names of the one or more datasets stored in the hardware storage device; and generating the schema to exclude from accessible data that data associated with fields names corresponding to the pre-defined field names indicative of PII or sensitive data. The operations further include: generating a computer program to perform operations including: accessing, from a hardware storage device, metadata specifying fields of one or more datasets stored in the hardware storage device and data specifying allowed operations; generating the schema in accordance with the accessed metadata and the accessed data, with the schema specifying which of the fields are accessible in responding to a request; receiving, from a client device by a computer system, the request for data based on the one or more datasets; transmitting the request and the schema to the artificial intelligence engine; receiving from the artificial intelligence engine the dataset specification that includes the structured, machine-readable representation of the request that has been generated in accordance with the schema; compiling the dataset specification into the query in accordance with the schema such that the query is executable to perform operations specified by the schema and access data specified by the schema; and storing, in a hardware storage device, the compiled query for execution; and executing the computer program to perform operations including: accessing, from a hardware storage device, metadata specifying fields of one or more datasets stored in the hardware storage device and data specifying allowed operations; generating the schema in accordance with the accessed metadata and the accessed data, with the schema specifying which of the fields are accessible in responding to a request; receiving, from a client device by a computer system, the request for data based on the one or more datasets; transmitting the request and the schema to the artificial intelligence engine; receiving from the artificial intelligence engine the dataset specification that includes a structured, machine-readable representation of the request that has been generated in accordance with the schema; compiling the dataset specification into the query in accordance with the schema such that the query is executable to perform operations specified by the schema and access data specified by the schema; and storing, in a hardware storage device, the compiled query for execution. The operations further include: validating the dataset specification to ensure compliance with the schema. The operations further include: validating the query to ensure that query is in compliance with the schema. The operations further include: executing the query; and based on execution of the query, retrieving, from a hardware storage device, data in accordance with the schema.

In yet another example, a system includes one or more processing devices; one or more machine-readable hardware storage devices storing instructions that are executable by the one or more processing devices to perform operations including: accessing, from a hardware storage device, metadata specifying fields of one or more datasets stored in the hardware storage device and data specifying allowed operations; generating a schema in accordance with the accessed metadata and the accessed data, with the schema specifying which of the fields are accessible in responding to a request; receiving, from a client device by a computer system, a request for data based on the one or more datasets; transmitting the request and the schema to an artificial intelligence engine; receiving from the artificial intelligence engine a dataset specification that includes a structured, machine-readable representation of the request that has been generated in accordance with the schema; compiling the dataset specification into a query in accordance with the schema such that the query is executable to perform operations specified by the schema and access data specified by the schema; and storing, in a hardware storage device, the compiled query for execution.

In this example, the dataset specification excludes requested data, when that requested data is specified by fields not represented in the schema. The schema is configured to exclude sensitive or personally identifiable information (PII) from accessible data. The operations further include: accessing, from the hardware storage device, instructions specifying that personally identifiable information (PII) or other sensitive data is excluded from representation in a dataset specification, the method further including: accessing pre-defined fields names indicative of PII or sensitive data; accessing fields names of the one or more datasets stored in the hardware storage device; and generating the schema to exclude from accessible data that data associated with fields names corresponding to the pre-defined field names indicative of PII or sensitive data. Other embodiments of this aspect include corresponding computer systems, apparatus, and computer programs recorded on one or more computer storage devices, each configured to perform the actions of the methods.

### DESCRIPTION OF DRAWINGS

FIG. 1 is a block diagram depicting a system for generating queries based on natural language analysis.
FIG. 2 is a block diagram showing a query generation system in detail.
Fig. 3 is a block diagram of a feedback generation system designed to provide feedback on user input in query generation.
FIG. 4 illustrates an example process for generating a query based on natural language input.
FIG. 5 is a diagram of an example computer system.

### DETAILED DESCRIPTION

Current approaches to query generation rely on LLMs to directly translate natural language user input into queries. This approach poses significant risks, especially when querying sensitive datasets, such as clinical trial data. Directly executing queries generated by LLMs can introduce errors, expose private information, and lead to unintended data modification, presenting serious privacy and operational risks. Queries generated without safeguards may include syntax errors, allow unauthorized data access, or alter the underlying data, all of which can compromise data integrity and privacy. These risks underscore the need for a query generation solution tailored specifically for sensitive data querying-one that provides controlled, validated query generation by design. The techniques described herein address these needs by automatically generating queries from natural language input, while enforcing controls to reduce privacy and security risks (e.g., relative to privacy and security risks without implementation of these techniques). Features of this solution include: (i) protecting sensitive information by eliminating or reducing the need to expose the full data model to the LLM, (ii) ensuring comprehensive control over permissible query operations on the dataset (e.g., enabling privacy-preserving query capabilities that enforce logic (e.g., strict business rules)), and (iii) reducing the risk of prompt-based or query injection attacks by design. This approach provides a robust, privacy-enforcing framework for query generation in environments where data sensitivity and operational control are essential.

Disclosed examples generate queries by a method where natural language user input is captured and processed by LLMs to produce a dataset specification, which then declaratively guides the programmatic generation of a query. Generally, a dataset specification includes a structured description that defines the content, organization, format, and constraints of one or more datasets. A dataset specification may include definitions of dataset fields, data types, allowed fields, values or ranges, relationships between fields, primary key and foreign key constraints, and metadata describing the dataset's schema. The dataset specification may further identify data source requirements, update or refresh rules, ordering or indexing parameters, and compliance or standardization criteria (e.g., adherence to Clinical Data Interchange Standards Consortium - Study Data Tabulation Model ("CDISC SDTM") or International Organization for Standardization ("ISO") formats) necessary for interoperability within the system. This ensures high-quality, accurate query operations while restricting unauthorized actions. The resulting query (e.g., SQL) can be executed on a dataset, while maintaining strict oversight over permissible query functions. Additionally, the method limits the LLM's exposure to only essential data elements, such as schema or metadata, reducing the risk of information leakage and enhancing data protection.

Considering the significant risk LLMs present in inadvertently leaking information about the data these models are trained on and exposed to, maintenance of data privacy is critical. Current safeguards and guardrails for these models have real limitations in differentiating between permissible actions and protection of sensitive information, resulting in a non-negligible chance that sensitive data may be exposed in normal or malicious interactions with a LLM. Considering the importance of preserving data privacy and the significant financial and discriminatory consequences of inadvertent disclosure, technologies built using LLMs (especially those operating on sensitive information, e.g., patient health records) require safety mechanisms that ensure restriction on information and operations in a deterministic manner. The enclosed method and system describe the use of LLMs to generate queries intermediated by a dataset specification that acts as a constraint to enforce the safety mechanisms to ensure that (i) sensitive information is not disclosed, and (ii) operations to be performed by the generated query are in accordance with the dataset specifications in the system.

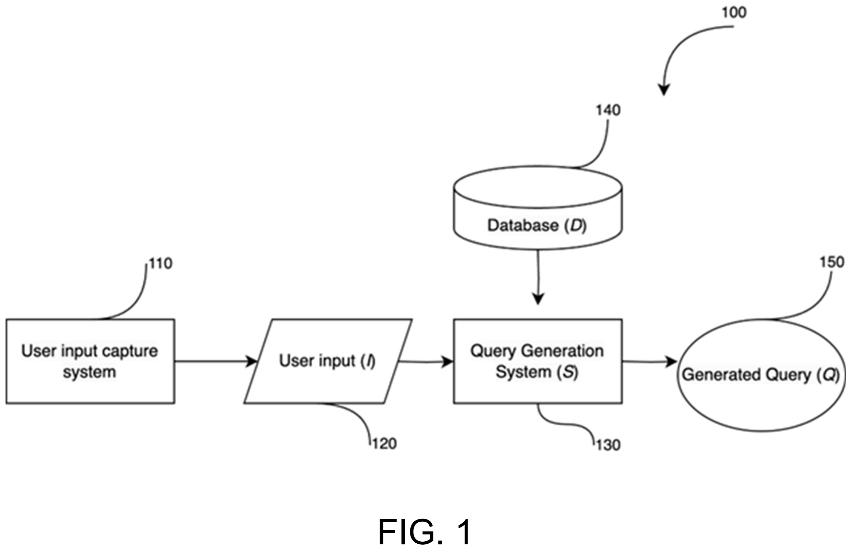

Referring to FIG. 1, a system 100 is shown for automatically generating a query 150 using a natural language user input 120. The system 100 receives the natural language user input 120 from a user input capture system 110. The natural language user input 120 may include specific instructions in natural language, for example: subsets of data ("list data that was extracted between 2010 to 2020 from system X"), transformations of data ("list the number of unique users in the dataset") or other expressions ("list the number of users and datapoints in system X"). The natural language user input 120 is passed to the query generation system 130, which incorporates metadata from a database 140 to create a query 150. This method is not restricted in its application to a single database and can be applied across multiple databases.

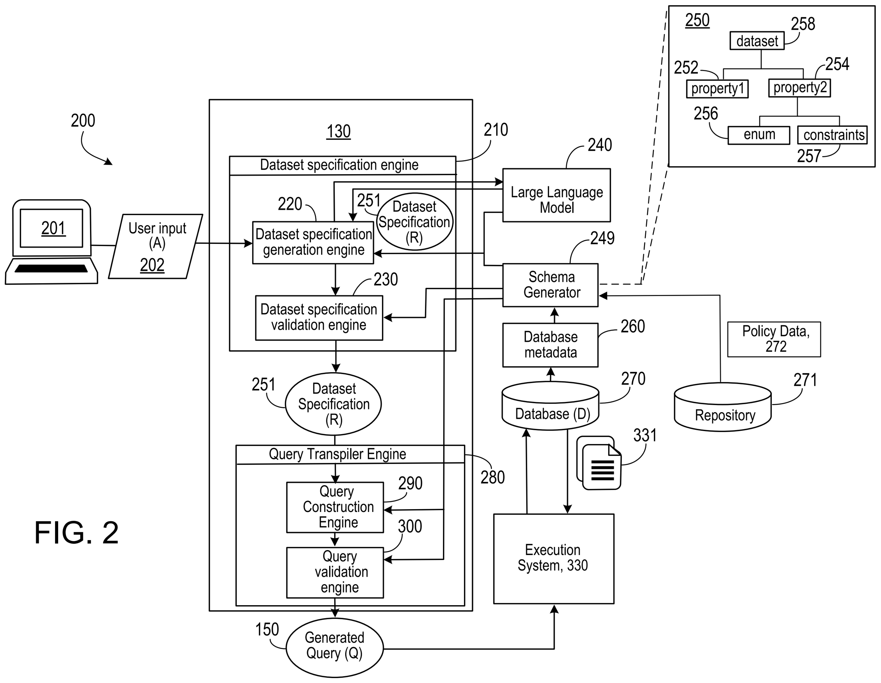

Referring to FIG. 2, an environment 200 is shown with the query generation system 130, a client device 201, a LLM 240, a schema generator 249, a database 270 and an execution system 330. The query generation system 130 includes a dataset specification engine 210 and a query transpiler engine 280. The dataset specification engine 210 includes a dataset specification generation engine 220 (for generating a dataset specification, e.g., by sending prompts to the LLM 240) and a dataset specification validation engine 230 (for validating the dataset specification). The query transpiler engine 280 includes a query construction engine 290 and a query validation engine 300, as described below.

The dataset specification generation engine 220 receives, from the client device 201, a user input 202, which includes a request for data from the database 270. In this example, the environment 200 also includes a schema generator 249 that generates a dataset specification schema 250 (referred to hereinafter as "schema 250") from database metadata 260 included in the database 270. That is, the database metadata 260 may be used by the schema generator 249 to construct the schema 250, which describes the properties and values available for the LLM 240 to use. The schema 250 may also specify relationships among fields in datasets stored in the database 270, as well as specifying the fields themselves (e.g., names of the fields).

In particular, the database metadata 260 may specify the enumerated values (or types of values) associated with each field of a dataset stored in the database 270. The database metadata 260 may also specify the types of fields (and associated field names) of datasets stored in database 270. The properties of the schema 250 may also be determined by allowed operations, which may be specified in the database metadata 260, in other data retrieved from the database 270, or in control sources, as described below. The allowed operations are a set of operations that may be informed by policies and requirements including: (i) functional requirements of the system, (ii) technical policies, (iii) legal policies, (iv) data and framework restrictions, and (v) other non-functional requirements. Allowed operations are critical to enforce policies and controls where the resulting queries will only include allowed operations. For example, an allowed operation may specify that personally identifiable information (PII) is masked, tokened, encrypted and so forth. In some examples, allowed operations are included or are restricted to filtrations of rows of a dataset using values for a specific set of columns. The allowed operations will dictate how the schema 250 is defined and also inform the query transpiler engine 280 downstream. Depending on the complexity of allowed operations (informed by requirements of the system), the schema 250 may allow nesting and/or varying forms of compositions of dataset specifications to allow flexibility and additional control for the user. The dataset specification engine 210 may refuse or decline to generate a dataset specification, e.g., when the user input 202 requests operations that are not allowable operations. In this example, the dataset specification engine 210 transmits to the client device 201 a refusal indicating why the request was not satisfied based on the allowable operations.

### Schema generation

In various examples, the schema generator 249 is configured to generate the schema 250 based on a combination of (at least) the allowed operations and the database metadata 260 obtained from the database 270.

The allowed operations are determined from one or more control sources that define permissible query actions within the system. The control sources can be included in environment 200 or external to environment 200. These control sources may include: (i) functional requirements-constraints derived from the intended functionality of the application or service (e.g., enabling only aggregation and filtering operations required by a reporting workflow); (ii) technical policies-rules embedded in the system architecture, such as limits on computationally expensive joins, constraints to maintain system performance, or prohibitions against full table scans; (iii) legal and compliance policies-requirements imposed by regulatory frameworks, contractual terms, or data governance rules that restrict access to certain fields or combinations of fields (e.g., Health Insurance Portability and Accountability Act restrictions on personally identifiable health data); (iv) data and framework restrictions-constraints dictated by the characteristics of the underlying data source or analytical framework, including limitations on data types, supported query syntax, or schema-level constraints; and (v) other requirements-including security controls, access privileges, or user role-based limitations.

In some examples, these control sources store policy data 272 within a policy repository 271 accessible to the query generation system 130. Generally, policy data includes data specifying one or more policies (e.g., rules) and/or allowed operations to be applied to underlying data, e.g., data stored in database 270. For example, a policy may specify that PII not be returned, that PII be masked before being returned, that unique identifiers be in a specified format, that operations to modify and/or overwrite the underlying data not be allowed, that only users of a specified user type or access level can retrieve PII, and so forth. The schema generator 249 retrieves the relevant policy data 272 in combination with the database metadata 260 to derive the allowed operations and/or policies. In some cases, the allowed operations may be dynamically determined based on the identity, role, or access level of the requesting user, or in response to detected changes in the database schema or policy set.

To construct the schema 250, the schema generator 249 first parses the database metadata 260 to obtain a baseline structural definition of the dataset, including the available properties, their associated value domains (e.g., enumerated values), relational constraints (e.g., primary and foreign keys), indexing information, and any inherent schema-level rules. The schema generator 249 then cross-references this baseline with the allowed operations to generate a constrained, policy-compliant schema. This cross-referencing process may remove properties or relationships that are not subject to any allowed operation or may annotate properties with constraints derived from the allowed operations (e.g., permitted filter values, supported aggregation functions, or allowable join conditions).

In some examples, the schema generator 249 applies compositional rules whereby certain allowed operations are conditionally enabled only for particular data types or enumerated values specified in the database metadata 260. For example, an aggregation operation may be permitted only on numerical fields identified in the metadata, whereas a filter operation may be constrained to categorical fields with enumerated values.

The resulting schema 250 is machine-readable and describes both the available dataset elements (and relationships among these elements) and the permitted ways in which those elements can be accessed or manipulated. By embedding policy and metadata constraints directly into the schema, the system (e.g., system 100 in FIG. 1) ensures that all downstream query generation-such as that performed by the dataset specification generation engine 220 and the query transpiler engine 280-adheres to both technical feasibility and policy compliance.

### PII Identification and Handling

The schema generator 249 determines whether a given property in the database metadata 260 constitutes PII using a combination of: (i) metadata classification-checking column-level governance tags, annotations, or descriptions for privacy labels (e.g., "PII", "Protected Health Information (PHI)", "Confidential"); (ii) naming pattern detection-matching field names against a policy-defined keyword list (e.g., "name," "ssn," "dob," "email," "phone," "address"); (iii) format and type analysis-matching data types and lengths to known identifier formats (e.g., nine-digit numbers for SSNs, specific regex patterns for phone numbers or email addresses); and (iv) sample value inspection-optionally sampling non-sensitive subsets of data for pattern matching or machine learning-based classification to detect identifiers or quasi-identifiers.

A PII classification policy stored in a policy repository (e.g., included in the database 270 or included in another database) maps database field identifiers to privacy categories such as "Direct Identifier", "Quasi-Identifier", and "Non-PII". The schema generator 249 cross-references this classification with allowed operations to determine appropriate handling. For "Direct Identifier" fields, the schema generator 249 may (a) omit the property entirely from the schema 250, (b) replace it with a tokenized or anonymized representation, or (c) include it with restricted allowed operations (e.g., disallow grouping or filtering that could reveal individual records). For "Quasi-Identifier" fields, additional statistical privacy thresholds (e.g., minimum group size) may be enforced through allowed operations.

That is, after PII detection, the schema generator 249 constructs the schema 250 by including only properties that are permissible under applicable technical, operational, and privacy policies. The schema 250 includes a hierarchical, machine-readable representation of permissible dataset elements and their associated operational constraints, designed to enable policy-compliant query generation while preventing exposure of PII from the database 270.

At the top level, the schema 250 includes a root dataset node 258 referencing one or more property nodes (e.g., property 1 node 252, property 2 node 254). Each property node corresponds to a dataset field identified by parsing the database metadata 260, which may specify field names, data types, enumerated value domains, relational constraints (e.g., primary and foreign keys), join logic across different datasets and indexing information. For each included property, the schema 250 may include child nodes such as an enumerated values node 256 (listing allowed categorical values) and a constraints node 257 (listing permitted operators, aggregation functions, or join keys), derived from the database metadata 260 and filtered through allowed operations. The schema 250 also specifies relationships among the nodes.

When the LLM 240 receives a user input 202 (e.g., from client device 201), it references the schema 250 to determine valid properties, enumerations, and operations for constructing the dataset specification 251. Because the schema 250 excludes or masks PII-containing fields and restricts high-risk operations, the LLM 240 cannot generate a dataset specification that directly or indirectly exposes PII from the database 270. That is, the schema 250 may exclude any fields containing PII or may just include the name of the field (but not the values themselves). This ensures that downstream components-including the dataset specification validation engine 230, the query transpiler engine 280, and the query construction engine 290-operate exclusively on a privacy-preserving, policy-compliant subset of the underlying data. By combining the database metadata 260, allowed operations, and automated PII detection, the schema generator 249 produces a constrained, hierarchical schema 250 that enables natural language query generation while enforcing privacy requirements and regulatory compliance.

The user input 202 and the schema 250 are passed to the LLM 240. The LLM's 240 hyperparameters may be set to enforce highly deterministic and repeatable behavior. This is important because the user may expect identical natural language specifications to produce identical outputs across repeated attempts. This behavior is also encouraged by the use of function calling. The LLM 240 may also be fine-tuned to improve performance on generating the dataset specifications as specified by the schema 250.

### Fine-tuning

In some examples, the LLM 240 is fine-tuned to improve its performance in generating dataset specifications that conform to the schema 250 and adhere to the allowed operations. Fine-tuning may be performed using LLM methods such as supervised fine-tuning, reinforcement learning from human feedback, reinforcement learning from AI feedback, or a combination thereof. A training dataset is constructed from historical dataset specifications that have been validated against the schema 250 and successfully used to generate compliant queries Q. Each training example may include: (i) a natural language request for data (analogous to a user input 202); (ii) the corresponding schema 250 in effect at the time of generation; and (iii) the resulting validated dataset specification. The LLM 240 is trained to map the combination of the natural language input and schema constraints to the correct, policy-compliant dataset specification output.

Fine-tuning may include negative sampling, in which examples of non-compliant or invalid dataset specifications are provided alongside the correct output, with the model penalized for producing non-compliant results. This improves the LLM's sensitivity to schema-level constraints, enumerated values, and allowed operations.

In some examples, fine-tuning incorporates function-calling formats during training, ensuring that the model's outputs follow a structured representation (e.g., JavaScript Object Notation (JSON) or another machine-readable format) directly compatible with the downstream query construction engine 290. The training process may also incorporate prompt templates that explicitly include the schema 250 as an input, teaching the LLM to reference schema constraints during generation rather than relying on statistical correlations alone.

Reinforcement learning may further be applied, in which the LLM's outputs are scored by the dataset specification validation engine 230. Outputs that pass validation against the schema 250 and allowed operations are assigned higher rewards, while outputs that fail validation are penalized. The LLM them receives reward signals (as input) specifying which outputs received higher rewards. These reward signals are then used to adjust the LLM's parameters during training. This iterative feedback loop gradually biases the LLM 240 toward producing outputs that are both semantically correct and compliant with operational, technical, and policy constraints. Through this fine-tuning process, the LLM 240 develops a specialized capability to interpret natural language requests in light of schema-defined constraints, producing deterministic and repeatable dataset specifications that integrate seamlessly into the query generation system 130. Supervised learning may be applied to fine-tune LLM output by asking users to provide feedback and incorporating that feedback as labels to fine-tune the LLM's performance against those labels.

Along with the user input 202 and the schema 250, additional instructions in the form of a system prompt may be provided (e.g., from a client device 201) to the LLM 240 to improve performance in generating the dataset specification 251. The system prompt may include information about (i) the description of the domain/business object, (ii) interpretation of the properties in the schema 250, and/or (iii) additional information about the constraints in generating the dataset specification 251. Additionally, few-shot prompting may be provided that add additional context, details and/or limitations and constraints.

### Few-Shot Prompt Generation and Use

In this example, the system employs few-shot prompting to improve the performance of the LLM 240 in generating the dataset specification 251 from the user input 202 in view of the schema 250 and allowed operations. A few-shot prompt includes a small number of representative input-output examples presented to the LLM 240 prior to requesting the model's own output, thereby conditioning the model to follow a desired transformation pattern. By providing examples that are compliant with the constraints embodied in the schema 250 and allowed operations, the system biases the LLM 240 toward generating policy-compliant, technically feasible dataset specifications.

In some examples, the few-shot prompts are dynamically constructed from historical dataset specification records stored in association with the query generation system 130. Each record may include: (i) a natural language request for data, analogous to user input; (ii) the schema 250 and allowed operations applicable at the time of the request; and (iii) a validated version of the dataset specification 251 that was generated and successfully executed to produce compliant query. The system may select a subset of such records as exemplars, ensuring that the examples reflect diverse query structures, permitted operations, and field constraints defined by the schema 250.

For example, a first exemplar may illustrate a simple filtering operation constrained by enumerated values in the schema 250, a second exemplar may demonstrate an aggregation permitted only on numerical fields, and a third exemplar may show a join operation limited to specific key pairs defined in allowed operations. In some cases, the system selects exemplars that illustrate combinations of allowed operations, such as applying an aggregation only after filtering on a categorical field.

Few-shot prompts may be generated at runtime to reflect the current state of the schema 250 and allowed operations, thereby adapting to changes in the database metadata 260, policy repository contents, or user access privileges. In such examples, prompt generation logic retrieves one or more historical records matching the current constraints, formats them into a structured prompt, and appends this prompt to a system prompt before submission to the LLM 240.

The inclusion of few-shot prompts in the input to the LLM 240 improves the model's ability to produce a deterministic and repeatable dataset specification 251 that adheres to the current schema 250 and allowed operations. In some examples, the model is fine-tuned using few-shot prompt formats as part of its training dataset, thereby reinforcing the model's learned behavior to reference schema-level constraints explicitly during generation rather than relying solely on statistical correlations from its pre-training corpus. This integration of dynamically constructed few-shot prompts with schema-aware fine-tuning provides a technical improvement in ensuring that generated dataset specifications are both semantically correct and compliant with operational, technical, and policy constraints.

The LLM 240 may be equipped with both (i) a "query generation" tool and (ii) a "refusal" tool via function calling. If the request from the user input 202 cannot be supported by the schema 250, the LLM 240 may choose the refusal tool, prompting the dataset specification engine 210 to decline the request and provide the user with an explanation. The selection of the refusal tool may be prompted due to a number of reasons including but not limited to: (i) inappropriate requests, (ii) requests including operations that are not permitted by schema, (iii) requests for data that is incorrect or unavailable, or (iv) malicious attempts to extract system prompt or other information about the data that is not allowed by schema. The generated explanation to the user may include information on (i) the reason why the request was unsuccessful, (ii) possible modifications on the user input that may lead to successful query generation, and/or (iii) allowed operations and sample user input that the user may try instead of the original request.

### Schema Compliance Determination and Refusal Triggering

The LLM 240 determines whether a dataset specification can be generated for the user input 202 by evaluating the request against the schema 250 and the allowed operations. The schema 250 is provided to the LLM 240 in a machine-readable format, such as a JSON document, that enumerates the properties available in the dataset, associated data types, enumerated value domains, relational constraints (e.g., foreign key relationships), permitted joins, permitted aggregations and filters for each property, and any user-specific access restrictions. The allowed operations, derived from policy data and the database metadata 260, are likewise supplied as a structured input to the LLM 240.

In some examples, the function-calling interface for the query generation tool enforces constraints derived from the schema 250 and allowed operations. For example, the interface may be defined by a JSON schema or equivalent type system in which parameter values are restricted to valid data types (e.g., enumerants) from the schema 250. When the LLM 240 attempts to generate a dataset specification 251, any attempt to emit a property, operation, or enumerated value not present in the schema 250 or allowed operations will cause the decoding process to fail constraint validation. Upon such failure, the LLM 240 selects the refusal tool instead of the query generation tool, prompting the dataset specification engine 210 to decline the request and return a structured explanation to the client device 201.

In some examples, the LLM 240 may invoke schema lookup tools during generation to resolve conditional permissions or schema versioning. For example, a "lookup_field" function may return whether a requested field exists in the current schema 250; an "is_operation_allowed" function may return whether a specified operation is permitted on a given property; and a "join_allowed" function may indicate whether two entities are joinable under the current constraints. If any lookup indicates non-compliance, the LLM 240 invokes the refusal tool.

In some examples, a dataset specification 251 undergoes deterministic post-generation validation by the dataset specification validation engine 230. This engine 230 verifies that (i) referenced properties exist in the schema 250, (ii) property usage is type-compatible, (iii) categorical values match enumerated domains, (iv) join operations are explicitly permitted, and (v) user-specific access controls are satisfied. If validation fails, the dataset specification validation engine 230 returns an error code and rationale (e.g., "FIELD_NOT_FOUND," "JOIN_FORBIDDEN," or "VALUE_OUT_OF_RANGE"), which the LLM 240 surfaces through the refusal tool to produce a refusal response with explanation.

In some examples, a system prompt instructs the LLM 240 to treat the schema 250 and allowed operations as authoritative, and few-shot prompt exemplars include both compliant generations and refusal scenarios. This conditioning reinforces the model's behavior to select the refusal tool when a request cannot be satisfied under the current schema constraints. For dynamic databases, the schema 250 may include a version identifier; if the user input 202 references objects from a different version, the schema lookup tool may return a schema mismatch result, also triggering the refusal path. For role-based access control, an access-filtered version of the schema 250 is generated per request so that properties or operations outside the user's privileges are omitted, thereby causing otherwise valid requests to appear unsupported and leading to a principled refusal. Through this architecture, refusals are directly traceable to the constraints embodied in the schema 250 and allowed operations, thereby ensuring that the dataset specification 251 is technically feasible, policy-compliant, and executable by the downstream query construction engine 290.

If the LLM 240 selects the query generation tool, it may generate the dataset specification 251 (e.g., a structured JSON-like object) that adheres to the schema 250 and will be passed through the rest of the pipeline. In this example, the LLM 240 transmits the dataset specification 251 to the dataset specification generation engine 220.

### Schema-Driven Dataset Specification Generation

In some examples, when the LLM 240 selects the query generation tool, it produces a structured dataset specification 251 that conforms to the schema 250 and satisfies the allowed operations. The schema 250 provides the LLM 240 with an authoritative, machine-readable representation of the dataset's structural and operational constraints. This schema 250 may be encoded in a structured format (e.g., JSON, YAML, XML) and may enumerate, for each available property, its data type, permissible value domain, relational associations, and the subset of operations permitted on that property. The schema 250 may further include cross-property constraints, conditional rules (e.g., an aggregation permitted only if a corresponding grouping field is present), and user-specific restrictions derived from policy data.

During dataset specification generation, the schema 250 is supplied to the LLM 240 as part of its input context, optionally along with a system prompt and a few-shot prompt. The LLM 240 parses the schema 250 to identify properties and operations that match the semantic intent expressed in the user input 202. For example, if the input request specifies "average systolic blood pressure for male patients over age 60," the LLM 240 consults the schema 250 to determine: (i) that the property "systolic_bp" is numeric and supports aggregation using the "avg" function; (ii) that "age" is of type "integer" and can be filtered using a comparison predicate (e.g., > 60); and (iii) that "sex" is a categorical field with enumerated values including "male" and "female." The resulting dataset specification 251 includes only operations permitted under the schema, expressed in a structured, JSON-like format suitable for downstream processing.

In some examples, the schema 250 also guides value normalization and constraint annotation during generation. For example, if the schema 250 specifies that a date field uses "YYYY-MM-DD" formatting, the LLM 240 may normalize any date literals accordingly. If a filter value is not in the enumerated domain, the model may omit it or substitute the closest valid alternative, depending on system prompt instructions. Schema-provided constraints may also be embedded directly into the dataset specification 251, such as permitted filter operators for a given field, allowable join keys, or aggregation granularity limits.

Once constructed, the dataset specification 251 is transmitted to the dataset specification validation engine 230. In some examples, this engine 230 performs deterministic validation of the dataset specification 251 against the schema 250 to ensure compliance before passing the dataset specification 251 to the query transpiler engine 280 and the query construction engine 290. This validation step verifies that all fields, operations, and values in the dataset specification 251 are present and allowed in the schema 250, ensuring that the resulting queries are technically feasible, policy-compliant, and optimized for the underlying database 270.

By embedding the schema 250 directly into the process implemented by dataset specification engine 210, the system ensures that natural-language-driven query creation remains bounded by explicit, machine-readable constraints. This provides a technical improvement over unconstrained natural-language systems, which may generate semantically plausible but technically invalid queries, thereby reducing execution errors, improving compliance with operational and legal policies, and enhancing deterministic repeatability of query generation.

In particular, the dataset specification validation engine 230 confirms that the properties in the dataset specification 251 are restricted to those specified by the schema 250 and that the values for those properties are drawn from the enumerations in the schema where applicable. In this example, the dataset specification validation engine 230 outputs a validated version of the dataset specification 251. The validated version of the dataset specification 251 is also referred to as a dataset specification 251, for purposes of convenience and without limitation. This validation step ensures that the dataset specification 251 is processed without error (or with reduced errors) by the query transpiler engine 280, as described below.

Within the query transpiler engine 280, the query construction engine 290 programmatically transpiles the dataset specification 251 into a query 150. Generally, transpiling includes translating code written in one programming language into code in another programming language.

The query transpiler engine 280 (and its subcomponents: (i) query construction engine 290 and (ii) query validation engine 300) is designed around the allowed operations (including data restrictions, access controls, policies, allowed query operations, and other non-functional requirements) and the schema 250. For instance, in a system where allowed operations are restricted to filtration of dataset using a specific set of columns of a dataset, the properties of the schema 250 may be defined as the names of the columns that will be used to filter the dataset. The values corresponding to these properties will be the values that can be used to filter the dataset. The dataset specification 251 may be stored as a JSON-like object to store the properties and corresponding values to be used for filtration of the dataset. In this case, the query transpiler engine 280 can be designed to programmatically construct a query (e.g., SQL query) where the properties within the dataset specification 251 will be used to filter the dataset. In this example, if the dataset specification is defined as a JSON-like object {"user_name": "Jane Doe"}, the corresponding SQL query constructed by the query transpiler engine 280 will be "SELECT * FROM user WHERE user_name='Jane Doe‴. In this example, the query transpiler engine 280 consults the schema 250 to resolve the logical field *"user_name"* into its concrete database representation. The schema 250 may specify that the logical field *"user_name"* corresponds to column user_name in a user table (e.g., a table named "user"). By performing this resolution step at runtime, the query transpiler engine 280 ensures that the abstract property in the dataset specification 251 is correctly bound to the actual table and column identifiers of a dataset in the database 270.

The allowed operations may be extended to a selection of a subset of columns, aggregations across one or more columns, and/or other related operations. Depending on the allowed operations, the schema 250 and the query transpiler engine 280 are designed to accommodate these operations, restrictions, policies and controls.

In other words, the query transpiler engine 280 (also referred to herein as the transpiler 280, for purposes of convenience and without limitation) includes a query generator (e.g., a SQL generator) purpose-built to translate only those dataset specifications that conform to the rules in the schema 250 and allowed operations. The schema 250 defines what fields and operations are possible, while the allowed operations define how those fields can be used. The dataset specification 251 acts as a bridge between these two, capturing the specific, compliant instructions for a single request in a format the transpiler 280 can directly convert into a valid query. This design means the transpiler 280 does not have to interpret raw natural language or guess at user intent; instead, the transpiler 280 simply maps the structured instructions in the dataset specification 251 into executable queries, making the system more predictable, secure, and easier to audit.

By requiring the query transpiler engine 280 to operate exclusively on the dataset specification 251 that has been pre-generated and validated against the schema 250 and allowed operations, the system provides an additional technical safeguard against unauthorized or non-compliant query execution. In particular, because the dataset specification 251 includes a structured, machine-readable intermediate representation of the user's request-separate from the executable query -it can be fully inspected by the dataset specification validation engine 230 before being accepted by the query construction engine 290. This separation of concerns ensures that the transpiler 280 never processes raw, unconstrained natural language input, thereby eliminating opportunities for policy circumvention, SQL injection, or accidental inclusion of restricted fields such as PII from the database 270. Furthermore, this architecture enables deterministic enforcement of operational controls: even if the schema 250 and allowed operations change over time, the dataset specification 251 reflects a compliant, context-specific subset of dataset capabilities, and the transpiler 280 is coded to only render queries that remain within that subset. This dual-stage process- dataset specification generation under schema constraints, followed by transpilation under the same constraints-results in a system that is not only flexible and portable across different database engines, but also inherently more secure, auditable, and resistant to inadvertent or malicious query expansion beyond authorized parameters.

The generated query is passed through a query validation engine 300, which ensures that the query 150 is safe to execute. Generally, validation includes (i) ensuring "safe" output, and (ii) ensuring that the value returned is in fact one of the values in the data. Regarding (i), the query validation engine 300 passes the query through content and compliance filters to ensure the query meets content and privacy policies, among others. For example, safe output may refer to content that has passed through such filters (sometimes referred to as "guardrails"). Regarding (ii), the query validation engine 300 validates that any literal values or parameters in the query actually exist in the database before running it. For example, if the generated query specifies "SELECT * FROM users WHERE country='XYZ'," the system may first verify that 'XYZ' is a valid country code contained in the underlying data, thereby preventing execution of queries that would return no results or indicate that the query would produce an invalid or off-target value.

In some examples, the parameters of the query 150 (e.g., the bind parameters) are themselves extracted and validated. Generally, bind parameters are placeholder parameters that get bound to actual values at runtime. Using bind parameters improves efficiency, because they allow a database to reuse execution plans instead of recompiling a SQL statement each time. In this example, the query validation engine 300 checks that the bind parameters meet expected criteria (e.g., conform to expected rules or formats such as correct type (integer, string), allowed value range, no malicious input, etc.).

Given the construction of this system, where schema and allowed operations directly dictate the process of how the query 150 is constructed by the query construction engine 290, the chances of failure are reduced or minimal. The query validation engine 300 is designed in accordance with schema and allowed operations to ensure compliance to functional and non-functional requirements of the system. In some examples, the query validation engine 300 receives the schema 250 and the query validation engine 300 is configured to confirm that the query 150 complies with the schema 250. In other examples, the query validation engine 300 is pre-programmed in accordance with the schema 250, e.g., to ensure that a query complies with the schema 250. The query validation engine 300 outputs the query 150. The execution system 330 executes the query 150 on data (e.g., datasets 331) in the database 270, for example, to generate results and transmit those results to the client device 201. In this example, the results include fields and data specified by the schema 250 and the allowed operations as being accessible for retrieval.

As described herein, the query transpiler engine 280 consumes the dataset specification 251 together with the contemporaneous schema 250 at query-construction time. Although the dataset specification 251 has previously been validated for conformity, the schema 250 serves as the execution-time source of truth that (i) resolves dataset specification fields to concrete database objects (e.g., table/column identifiers, key relationships, and required join paths); (ii) supplies data-type, formatting, and collation rules needed to render syntactically and semantically correct predicates; (iii) applies policy-bound transformations such as masking, tokenization, or aggregation thresholds that may be updated after the dataset specification 251 was generated; (iv) maps logical operations in the dataset specification 251 to engine-specific constructs (e.g., SQL dialect features, optimizer hints, or access-controlled views); and (v) re-verifies compliance against current allowed operations in case of policy or metadata drift. By binding query construction to the schema 250, the transpiler 280 enforces a defense-in-depth model in which non-conforming, stale, or ambiguous instructions in the dataset specification 251 cannot produce an executable query, thereby ensuring correctness, portability across back-ends, and deterministic adherence to technical and security controls. The generated query 150 can be executed on datasets of interest to obtain the resulting output of interest. These results may be sent to the user to export or preview in the system 100 (FIG. 1) through additional tools.

The query construction engine 290 may also generate a user-friendly, readable "external-facing query" that can be surfaced to the user to ensure it aligns with their expectations. This "external-facing query" can also be used to track the set of operations that were performed on the data underneath to generate the desired output, adding transparency and traceability to the process. Tables from the "external-facing query" may match tables produced by the query 150 via a transformation performable within a common table expression.

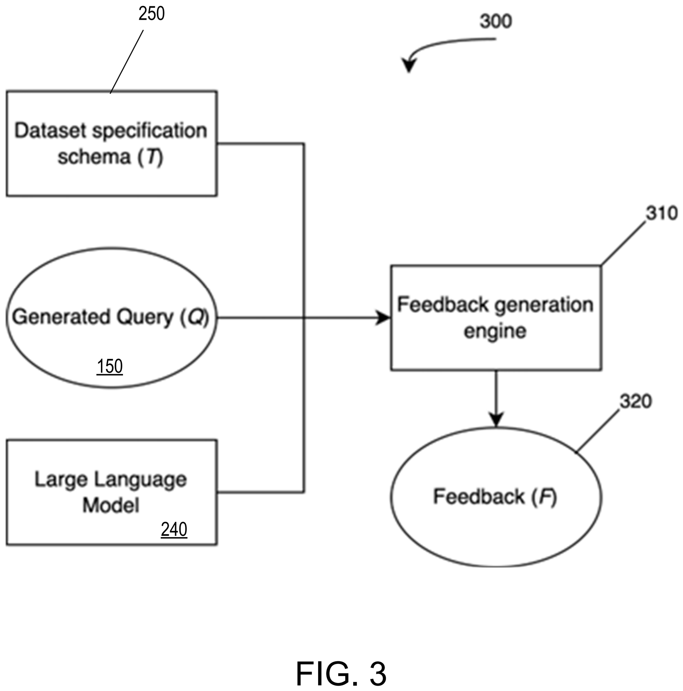

Referring to FIG. 3, feedback generation engine 310 is shown. Feedback generation engine 310 may take as input the generated query 150, the schema 250, and the user input (not shown). The feedback generation engine 310 may use the LLM 240 to generate feedback 320 indicating how the request was processed, which is presented back to the user. The feedback may also include suggestions for modifications, such as ways to rephrase the request to better align with the properties defined in the schema or explanations and reasons for partially fulfilled responses. The engine may take an "external-facing" query instead of the generated query 150 as input. Additional details may be added to the system prompt and/or few-shot prompts to provide guidance on the content of the feedback 320. The LLM 240 may be fine-tuned to generate feedback to improve tone, style, understanding, guidance, quality and/or other characteristics of the generated feedback that may be important for the user experience.

In addition to the description above and accompanying figures, implementations may be based at least in part on the following methodological pseudo code for generating queries using natural input, as shown in the below Table 1:

**Table 1**

| | |
|---|---|
| 1. Obtain natural user input from user input capture system. | |
| 2. Send user input to the dataset specification engine to generate dataset specification in accordance to prespecified allowed operations. | |
| 3. Within dataset specification generation engine, send system prompt constructed using database metadata, function calling tools for "query generation" and "refusal", dataset specification schema, information from allowed operations, and few-shot prompts to LLM to enforce expectations on desired output from the LLM. This generates a dataset specification. | |
| | a. The function calling tools correspond to two types of output: "query generation" and "refusal" where - for invalid, unsupported user inputs - the LLM is instructed to refuse generating a dataset specification or to otherwise not generate one. In all other cases, a dataset specification is provided. In some examples, the dataset specification engine 210 itself issues the refusal, e.g., when the request specifies unallowed operations or would otherwise result in execution of unallowed operations. |
| 4. Generated dataset specification is validated through the dataset specification validation engine to ensure that it complies to the schema. The validated dataset specification is then passed downstream. | |
| 5. To generate the query, the query transpiler engine uses two components: query construction engine and query validation engine. The query construction engine takes the validated dataset specification to programmatically construct the query using the allowed operations and schema. | |
| 6. The constructed query is validated using the query validation engine to ensure that the constructed query performs correctly and will not surface issues in its execution. | |
| 7. The validated, generated query can now be executed on the database to result in the desired dataset/information. | |
| 8. The generated query and the dataset specification schema can be used to generate feedback using the feedback generation engine to provide explanations for the system, including: (i) the generated query and what it entails, (ii) restrictions of the system, (iii) details about the system, and (iv) modifications required in user input to generate the desired query. | |

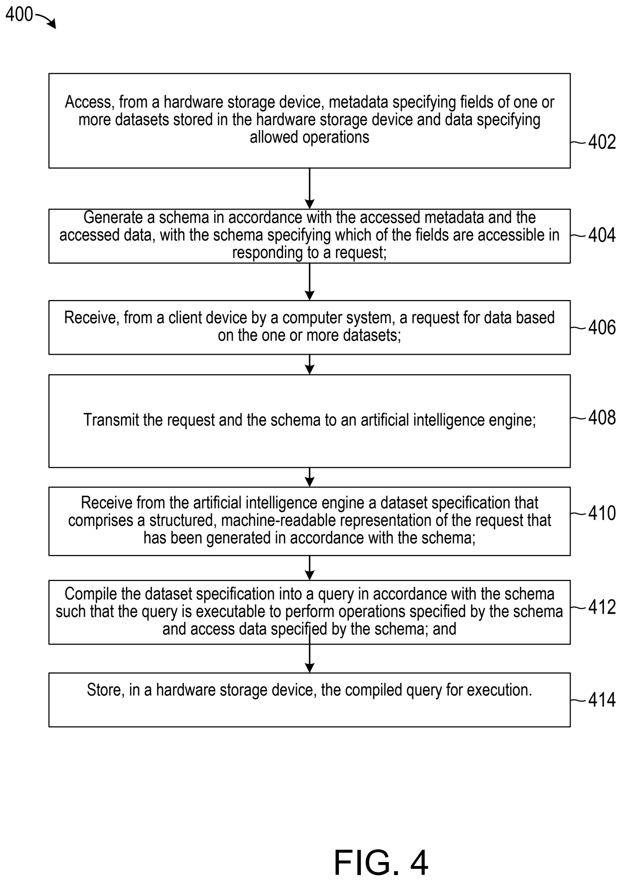

Referring to FIG. 4, an example process 400 is shown for generating a query based on natural language input. In this example, a system accesses (402), from a hardware storage device, metadata specifying fields of one or more datasets stored in a hardware storage device and data specifying allowed operations. The system generates (404) a schema in accordance with the accessed metadata and the accessed data, with the schema specifying which of the fields are accessible in responding to a request. The system receives (406), from a client device by a computer system, a request for data based on the one or more datasets. The request includes natural language input. The system transmits (408) the request and the schema to an artificial intelligence engine. The system receives (410), from the artificial intelligence engine, a dataset specification that includes a structured, machine-readable representation of the request that has been generated in accordance with the schema. The system compiles (412) the dataset specification into a query in accordance with the schema such that the query is executable to perform operations specified by the schema and access data specified by the schema. The system stores (414), in a hardware storage device, the compiled query for execution.

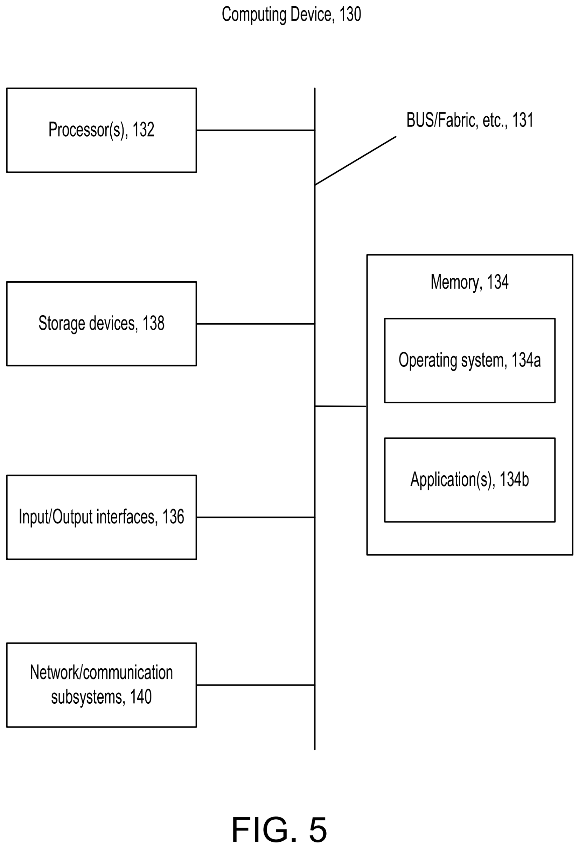

Referring to FIG. 5, an example operating environment for implementing an example of techniques described herein is shown and designated generally as computing device 130. The computing device 130 (also referred to as a computer or data processing system or client or server) includes one or more programmable processors 132 for performing actions in accordance with instructions and one or more memory devices 134 for storing instructions and data. Generally, a computer will also include, or be operatively coupled, (via bus 131, fabric, network, etc.,) to I/O components 136, e.g., display devices, network/ communication subsystems, etc. (not shown) and one or more mass storage devices 138 for storing data and instructions, etc., and a network communication subsystem 140, which are powered by a power supply (not shown). In memory 134, are an operating system 134a and applications 134b for application programming.

The computer program instructions and data may be stored in non-transitory form, such as being embodied in a volatile or non-volatile storage medium, or any other non-transitory medium, using a physical property of the medium (e.g., surface pits and lands, magnetic domains, or electrical charge) for a period of time (e.g., the time between refresh periods of a dynamic memory device such as a dynamic RAM). In preparation for loading the instructions, the software may be provided on a tangible, non-transitory medium, such as a CD-ROM or other computer-readable medium (e.g., readable by a general or special purpose computing system or device), or may be delivered (e.g., encoded in a propagated signal) over a communication medium of a network to a tangible, non-transitory medium of a computing system where it is executed. Some or all of the processing may be performed on a special purpose computer, or using special-purpose hardware, such as coprocessors or field-programmable gate arrays (FPGAs) or dedicated, application-specific integrated circuits (ASICs). The processing may be implemented in a distributed manner in which different parts of the computation specified by the software are performed by different computing elements. Each such computer program is stored on or downloaded (from a cloud computing infrastructure or other remote source) to a computer-readable storage medium (e.g., solid state memory or media, or magnetic or optical media) of a storage device accessible by a general or special purpose programmable computer, for configuring and operating the computer when the storage device medium is read by the computer to perform the processing described herein. Each such computer program may also be accessed as a service provided by cloud computing infrastructure. The example described herein may also be implemented as a tangible, non-transitory medium, configured with a computer program, where the medium so configured causes a computer to operate in a specific and predefined manner to perform one or more of the processing steps described herein.

The computer program may include one or more modules of a larger program, for example, which provides services related to the design, configuration, and execution of the program. The modules of the program can be implemented as data structures or other organized data conforming to a data model stored in a data repository.

To provide for interaction with a user, examples of the subject matter described in this specification can be implemented on a computer having a display device (monitor) for displaying information to the user, and a keyboard and a pointing device, (e.g., a mouse or a trackball) by which the user can provide input to the computer. In addition, a computer can interact with a user by sending documents to and receiving documents from a device that is used by the user (for example, by sending web pages to a web browser on a user's device in response to requests received from the web browser).

Examples of the subject matter described in this specification can be implemented in a computing system that includes a back end component (e.g., as a data server), or that includes a middleware component (e.g., an application server), or that includes a front end component (e.g., a user computer having a graphical user interface or a Web browser through which a user can interact with an implementation of the subject matter described in this specification), or any combination of one or more such back end, middleware, or front end components. The components of the system can be interconnected by any form or medium of digital data communication (e.g., a communication network). Examples of communication networks include a local area network ("LAN"), a wide area network ("WAN"), an inter-network (e.g., the Internet), and peer-to-peer networks (e.g., ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some examples, a server transmits data (e.g., an HTML page) to a client device (e.g., for purposes of displaying data to and receiving user input from a user interacting with the user device). Data generated at the client device (e.g., a result of the user interaction) can be received from the client device at the server.

While this specification contains many specific implementation details, these should not be construed as limitations on the scope of any inventions or of what may be claimed, but rather as descriptions of features specific to particular examples of particular inventions.

Similarly, while operations are depicted in the drawings in a particular order, this should not be understood as requiring that such operations be performed in the particular order shown or in sequential order, or that all illustrated operations be performed, to achieve desirable results. Moreover, the separation of various system components in the example described above should not be understood as requiring such separation in all examples, and it should be understood that the described program components and systems can generally be integrated together in a single software product or packaged into multiple software products.

A number of examples have been described. Nevertheless, it will be understood that various modifications may be made without departing from the spirit and scope of the techniques described herein. For example, some of the steps described above may be order independent, and thus can be performed in an order different from that described. Accordingly, other examples are within the scope of the following claims.

### EMBODIMENTS

Although the present invention is defined in the claims, it should be understood that the present invention can also (alternatively) be defined in accordance with the following embodiments:
1. A method for generating query for database **D** from natural user input **I** collected through a user input capture system, the method comprising of:
   a) Sending user input **I** to the dataset specification generation engine to generate the dataset specification **R.**
      i) Sending system prompt **P_{system},** database metadata **M,** dataset specification schema **T** to large language model **L** according to the allowed operations **O** (e.g. (i) functional requirements of the system, (ii) technical policies, (iii) legal policies, (iv) data and framework restrictions, and (v) other non-functional requirements)
      ii) The dataset specification schema **T** consisting of properties that indicate columns that can be used to filter rows of the dataset
      iii) Generating dataset specification **R** using large language model **L**
   b) Validating dataset specification **R** using dataset specification validation engine to ensure it complies with dataset specification schema **T,** database metadata **M,** and allowed operations **O.**
   c) Generating query **Q** using dataset specification **R** using the query transpiler engine.
      i) Using dataset specification schema **T,** database metadata **M,** dataset specification **R,** and allowed operations **O,** query construction engine is used to programmatically generate Query **Q**
      ii) Allowed Operations O dictate the schema T as filtering functions with pre-defined parameters such as the table to be filtered, the columns on which to filter and the allowed values or ranges of value to limits.
      iii) The transpiler may be composed of a CASE -- WHEN type tree where the allowed operations O are each defined by logical gates for each CASE. When a CASE is not allowed the system "refuses" or skips over the specific case. Here the cases each correspond with a parametrized SQL function that has been certified to meet the policy requirements of the system such that, in aggregate, the system either selects a permitted query operation and provides it with validated parameters or refuses to answer.
      iv) Generated query Q can be validated using the query validation engine to ensure that query is in compliance with the allowed operations O.
   d) Generate Feedback **F** using query **Q,** dataset specification schema **T,** system prompt **P'_{system}** and few-shot prompts **P'_{few-shot}**
2. The method of embodiment 1, wherein an alternative method natural language processing model to large language models is used to generate dataset specification R
3. The method of embodiment 1, wherein few-shot prompts Pfew-shot and/or P'few-shot are not provided
4. The method of embodiment 1, where generated Query Q is executed on database D to generate dataset of interest D'
5. The method of embodiment 1, wherein hyperparameters set H is provided to the large language model L used to generate the dataset specification R
6. The method of embodiment 1, wherein database metadata M is not provided
7. The method of embodiment 1, wherein feedback F is not generated
8. The method of embodiment 1, wherein dataset specification R fulfills the user input partially by excluding operations that don't comply with the restrictions imposed by dataset specification schema T and allowed operations O
9. The method of embodiment 1, wherein the dataset specification R is in JSON format
10. The method of embodiment 1, wherein the query Q is in SQL or an alternative data querying language (e.g. NoSQL, GraphQL)
11. The method of embodiment 1, where the large language model L is finetuned
12. The method of embodiment 1, wherein queries are generated across multiple databases and datasets
13. The method of embodiment 1, wherein the allowed operations O are not limited to filtration but include some or all querying operations (e.g. aggregation, selection of columns, sorting)
14. The method of embodiment 1, wherein the schema T is a deep tree like structure to allow for nested and/or various forms of compositions of query operations in order to implement complex requirements for allowed operations O. The query transpiler is designed to accommodate these requirements.
15. The method of embodiment 1, wherein the system supports multi-language querying capabilities

### FURTHER EMBODIMENTS

Although the present invention is defined in the claims, it should be understood that the present invention can also (alternatively) be defined in accordance with the following embodiments:
1. A computer-implemented method, comprising:
   accessing, from a hardware storage device, metadata specifying fields of one or more datasets stored in the hardware storage device and data specifying allowed operations;
   generating a schema in accordance with the accessed metadata and the accessed data, with the schema specifying which of the fields are accessible in responding to a request;
   receiving, from a client device by a computer system, a request for data based on the one or more datasets;
   transmitting the request and the schema to an artificial intelligence engine;
   receiving from the artificial intelligence engine a dataset specification that comprises a structured, machine-readable representation of the request that has been generated in accordance with the schema;
   compiling the dataset specification into a query in accordance with the schema such that the query is executable to perform operations specified by the schema and access data specified by the schema; and
   storing, in a hardware storage device, the compiled query for execution.
2. The computer-implemented method of embodiment 1, wherein the dataset specification excludes requested data, when that requested data is specified by fields not represented in the schema.
3. The computer-implemented method of embodiment 1, wherein the schema is configured to exclude sensitive or personally identifiable information (PII) from accessible data.
4. The computer-implemented method of embodiment 1, further comprising:
   accessing, from the hardware storage device, instructions specifying that personally identifiable information (PII) or other sensitive data is excluded from representation in a dataset specification, the method further comprising:
   accessing pre-defined fields names indicative of PII or sensitive data;
   accessing fields names of the one or more datasets stored in the hardware storage device; and
   generating the schema to exclude from accessible data that data associated with fields names corresponding to the pre-defined field names indicative of PII or sensitive data.
5. The computer-implemented method of embodiment 1, further comprising:
   generating a computer program to perform operations comprising:
   accessing, from a hardware storage device, metadata specifying fields of one or more datasets stored in the hardware storage device and data specifying allowed operations;
   generating the schema in accordance with the accessed metadata and the accessed data, with the schema specifying which of the fields are accessible in responding to a request;
   receiving, from a client device by a computer system, the request for data based on the one or more datasets;
   transmitting the request and the schema to the artificial intelligence engine;
   receiving from the artificial intelligence engine the dataset specification that comprises the structured, machine-readable representation of the request that has been generated in accordance with the schema;
   compiling the dataset specification into the query in accordance with the schema such that the query is executable to perform operations specified by the schema and access data specified by the schema; and
   storing, in a hardware storage device, the compiled query for execution; and executing the computer program to perform operations comprising:
      accessing, from a hardware storage device, metadata specifying fields of one or more datasets stored in the hardware storage device and data specifying allowed operations;
      generating the schema in accordance with the accessed metadata and the accessed data, with the schema specifying which of the fields are accessible in responding to a request;
      receiving, from a client device by a computer system, the request for data based on the one or more datasets;
      transmitting the request and the schema to the artificial intelligence engine;
      receiving from the artificial intelligence engine the dataset specification that comprises a structured, machine-readable representation of the request that has been generated in accordance with the schema;
      compiling the dataset specification into the query in accordance with the schema such that the query is executable to perform operations specified by the schema and access data specified by the schema; and
      storing, in a hardware storage device, the compiled query for execution.
6. The computer-implemented method of embodiment 1, further comprising:
   validating the dataset specification to ensure compliance with the schema.
7. The computer-implemented method of embodiment 1, further comprising:
   validating the query to ensure that query is in compliance with the schema.
8. The computer-implemented method of embodiment 1, further comprising:
   executing the query; and
   based on execution of the query, retrieving, from a hardware storage device, data in accordance with the schema.
9. One or more machine-readable hardware storage devices storing instructions that are executable by one or more processing devices to perform operations comprising:
   accessing, from a hardware storage device, metadata specifying fields of one or more datasets stored in the hardware storage device and data specifying allowed operations;
   generating a schema in accordance with the accessed metadata and the accessed data, with the schema specifying which of the fields are accessible in responding to a request;
   receiving, from a client device by a computer system, a request for data based on the one or more datasets;
   transmitting the request and the schema to an artificial intelligence engine;
   receiving from the artificial intelligence engine a dataset specification that comprises a structured, machine-readable representation of the request that has been generated in accordance with the schema;
   compiling the dataset specification into a query in accordance with the schema such that the query is executable to perform operations specified by the schema and access data specified by the schema; and
   storing, in a hardware storage device, the compiled query for execution.
10. The one or more machine-readable hardware storage devices of embodiment 9, wherein the dataset specification excludes requested data, when that requested data is specified by fields not represented in the schema.
11. The one or more machine-readable hardware storage devices of embodiment 9, wherein the schema is configured to exclude sensitive or personally identifiable information (PII) from accessible data.
12. The one or more machine-readable hardware storage devices of embodiment 9, wherein the operations further comprise:
   accessing, from the hardware storage device, instructions specifying that personally identifiable information (PII) or other sensitive data is excluded from representation in a dataset specification, the method further comprising:
   accessing pre-defined fields names indicative of PII or sensitive data;
   accessing fields names of the one or more datasets stored in the hardware storage device; and
   generating the schema to exclude from accessible data that data associated with fields names corresponding to the pre-defined field names indicative of PII or sensitive data.
13. The one or more machine-readable hardware storage devices of embodiment 9, wherein the operations further comprise:
   generating a computer program to perform operations comprising:
   accessing, from a hardware storage device, metadata specifying fields of one or more datasets stored in the hardware storage device and data specifying allowed operations;
   generating the schema in accordance with the accessed metadata and the accessed data, with the schema specifying which of the fields are accessible in responding to a request;
   receiving, from a client device by a computer system, the request for data based on the one or more datasets;
   transmitting the request and the schema to the artificial intelligence engine;
   receiving from the artificial intelligence engine the dataset specification that comprises the structured, machine-readable representation of the request that has been generated in accordance with the schema;
   compiling the dataset specification into the query in accordance with the schema such that the query is executable to perform operations specified by the schema and access data specified by the schema; and
   storing, in a hardware storage device, the compiled query for execution; and executing the computer program to perform operations comprising:
      accessing, from a hardware storage device, metadata specifying fields of one or more datasets stored in the hardware storage device and data specifying allowed operations;
      generating the schema in accordance with the accessed metadata and the accessed data, with the schema specifying which of the fields are accessible in responding to a request;
      receiving, from a client device by a computer system, the request for data based on the one or more datasets;
      transmitting the request and the schema to the artificial intelligence engine;
      receiving from the artificial intelligence engine the dataset specification that comprises a structured, machine-readable representation of the request that has been generated in accordance with the schema;
      compiling the dataset specification into the query in accordance with the schema such that the query is executable to perform operations specified by the schema and access data specified by the schema; and
      storing, in a hardware storage device, the compiled query for execution.
14. The one or more machine-readable hardware storage devices of embodiment 9, wherein the operations further comprise:
   validating the dataset specification to ensure compliance with the schema.
15. The one or more machine-readable hardware storage devices of embodiment 9, wherein the operations further comprise:
   validating the query to ensure that query is in compliance with the schema.
16. The one or more machine-readable hardware storage devices of embodiment 9, wherein the operations further comprise:
   executing the query; and
   based on execution of the query, retrieving, from a hardware storage device, data in accordance with the schema.
17. A system comprising:
   one or more processing devices;
   one or more machine-readable hardware storage devices storing instructions that are executable by the one or more processing devices to perform operations comprising:
      accessing, from a hardware storage device, metadata specifying fields of one or more datasets stored in the hardware storage device and data specifying allowed operations;
      generating a schema in accordance with the accessed metadata and the accessed data, with the schema specifying which of the fields are accessible in responding to a request;
      receiving, from a client device by a computer system, a request for data based on the one or more datasets;
      transmitting the request and the schema to an artificial intelligence engine;
      receiving from the artificial intelligence engine a dataset specification that comprises a structured, machine-readable representation of the request that has been generated in accordance with the schema;
      compiling the dataset specification into a query in accordance with the schema such that the query is executable to perform operations specified by the schema and access data specified by the schema; and
      storing, in a hardware storage device, the compiled query for execution.
18. The system of embodiment 17, wherein the dataset specification excludes requested data, when that requested data is specified by fields not represented in the schema.
19. The system of embodiment 17, wherein the schema is configured to exclude sensitive or personally identifiable information (PII) from accessible data.
20. The system of embodiment 1, wherein the operations further comprise:
   accessing, from the hardware storage device, instructions specifying that personally identifiable information (PII) or other sensitive data is excluded from representation in a dataset specification, the method further comprising:
   accessing pre-defined fields names indicative of PII or sensitive data;
   accessing fields names of the one or more datasets stored in the hardware storage device; and
   generating the schema to exclude from accessible data that data associated with fields names corresponding to the pre-defined field names indicative of PII or sensitive data.

## Claims

1. A computer-implemented method (400), comprising:
accessing (402), from a hardware storage device, metadata specifying fields of one or more datasets stored in the hardware storage device and data specifying allowed operations;
generating (404) a schema in accordance with the accessed metadata and the accessed data, with the schema specifying which of the fields are accessible in responding to a request;
receiving (406), from a client device by a computer system, a request for data based on the one or more datasets;
transmitting (408) the request and the schema to an artificial intelligence engine;
receiving (410) from the artificial intelligence engine a dataset specification that comprises a structured, machine-readable representation of the request that has been generated in accordance with the schema;
compiling (412) the dataset specification into a query in accordance with the schema such that the query is executable to perform operations specified by the schema and access data specified by the schema; and
storing (414), in a hardware storage device, the compiled query for execution.

2. The computer-implemented method (400) of claim 1, wherein the dataset specification excludes requested data, when that requested data is specified by fields not represented in the schema.

3. The computer-implemented method (400) of any one of claims 1 or 2, wherein the schema is configured to exclude sensitive or personally identifiable information, PII, from accessible data.

4. The computer-implemented method (400) of any one of claims 1 to 3, further comprising:
accessing, from the hardware storage device, instructions specifying that personally identifiable information, PII, or other sensitive data is excluded from representation in a dataset specification, the method further comprising:
accessing pre-defined fields names indicative of PII or sensitive data;
accessing fields names of the one or more datasets stored in the hardware storage device; and
generating the schema to exclude from accessible data that data associated with fields names corresponding to the pre-defined field names indicative of PII or sensitive data.

5. The computer-implemented method (400) of any one of claims 1 to 4, further comprising:
generating a computer program to perform operations comprising:
accessing, from a hardware storage device, metadata specifying fields of one or more datasets stored in the hardware storage device and data specifying allowed operations;
generating the schema in accordance with the accessed metadata and the accessed data, with the schema specifying which of the fields are accessible in responding to a request;
receiving, from a client device by a computer system, the request for data based on the one or more datasets;
transmitting the request and the schema to the artificial intelligence engine;
receiving from the artificial intelligence engine the dataset specification that comprises the structured, machine-readable representation of the request that has been generated in accordance with the schema;
compiling the dataset specification into the query in accordance with the schema such that the query is executable to perform operations specified by the schema and access data specified by the schema; and
storing, in a hardware storage device, the compiled query for execution; and executing the computer program to perform operations comprising:
accessing, from a hardware storage device, metadata specifying fields of one or more datasets stored in the hardware storage device and data specifying allowed operations;
generating the schema in accordance with the accessed metadata and the accessed data, with the schema specifying which of the fields are accessible in responding to a request;
receiving, from a client device by a computer system, the request for data based on the one or more datasets;
transmitting the request and the schema to the artificial intelligence engine;
receiving from the artificial intelligence engine the dataset specification that comprises a structured, machine-readable representation of the request that has been generated in accordance with the schema;
compiling the dataset specification into the query in accordance with the schema such that the query is executable to perform operations specified by the schema and access data specified by the schema; and
storing, in a hardware storage device, the compiled query for execution.

6. The computer-implemented method (400) of any one of claims 1 to 5, further comprising:
validating the dataset specification to ensure compliance with the schema.

7. The computer-implemented method (400) of any one of claims 1 to 6, further comprising:
validating the query to ensure that query is in compliance with the schema.

8. The computer-implemented method (400) of any one of claims 1 to 7, further comprising:
executing the query; and
based on execution of the query, retrieving, from a hardware storage device, data in accordance with the schema.

9. One or more machine-readable hardware storage devices storing instructions that are executable by one or more processing devices to perform the method (400) of any one of claims 1 to 8.

10. A system comprising:
one or more processing devices;
one or more machine-readable hardware storage devices storing instructions that are executable by the one or more processing devices to perform the method (400) of any one of claims 1 to 8.
